# EUROPEAN PATENT SPECIFICATION

(11) **EP 1 882 772 B1**
(45) Date of publication and mention of the grant of the patent: **03.06.2009**
(21) Application number: 06117831.5
(22) Date of filing: 25.07.2006
(51) Int. Cl.: D06F 39/02, A47L 15/44, G01N 29/02, G01N 29/44

(54) **Liquid classification device and electric household appliance for automatically washing articles and featuring such a device**
Flüssigkeitsklassifikationsvorrichtung und elektrisches Haushaltsgerät zum automatischen Waschen von Gegenständen mit einer solchen Vorrichtung
Appareil de classification de liquides et appareil électroménager pour laver des articles automatiquement comprenant ledit appareil de classification

(43) Date of publication of application: 30.01.2008
(73) Proprietor: Electrolux Home Products Corporation N.V., 1930 Zaventem (BE)
(72) Inventor: Migliolo, Francesco, 33170 Pordenone (IT)
(74) Representative: Röder, Richard

(56) References cited:
- DE-A1- 19 630 890
- DE-A1- 19 706 486
- US-A- 5 046 336
- US-A1- 2003 196 477

## Description

The present invention relates to a liquid classification device and to an electric household appliance for automatically washing articles and featuring such a device.

More specifically, the present invention relates to a device for classifying detergents, and to a washing-machine or dishwasher featuring such a device; to which application the following description refers purely by way of example.

A clothes washing machine with an additive liquid dispensing system is disclosed in US-A-5046336. As is known, some recently marketed washing-machines and dishwashers are designed to improve the wash cycle as a function of the machine load; and some models may even go so far as to meter the detergent as a function of the type of dirt involved and the amount of dishes or laundry loaded into the machine at the start of the wash cycle.

Unfortunately, since dirt removal efficiency varies considerably as a function of detergent composition, the electronic central control unit of the appliance is normally programmed to apply worst-case detergent doses to ensure a successful wash cycle at all times, even at the expense of using more detergent than is actually necessary.

It is an object of the present invention to provide an electric household appliance for automatically washing articles (be it a washing-machine or a dishwasher) capable of realizing a more precise dosage of the detergent used in the wash cycle.

According to the present invention, there is provided an electric household appliance for automatically washing articles, comprising a wash chamber in which the articles for washing are loaded, a detergent compartment in which the wash detergent is stored, and a detergent metering and feeding device which, on command, withdraws a given quantity of detergent from said detergent compartment and supplies the given quantity of detergent to the wash chamber; said electric household appliance being characterized by also comprising detergent classification means for classifying the detergent used in the wash cycle, and an electronic central control unit which controls said detergent metering and feeding device as a function of signals from said detergent classification means and of other operating parameters of the electric household appliance; said detergent classification means, on command, being able to examine the detergent from said detergent compartment to determine its efficiency class with reference to a predetermined number of efficiency classes, each of which is unequivocally associated with a respective group of detergents with substantially the same dirt-removing capacity, and to transmit said efficiency class to the electronic central control unit; and said electronic central control unit being able to calculate the ideal quantity of detergent to be supplied to the wash chamber by said detergent metering and feeding device on the basis of the efficiency class assigned to the detergent.

In a preferred embodiment, detergent classification means of said electric household appliance are able to determine the efficiency class of the detergent from said detergent compartment stochastically.

In a further preferred embodiment, detergent classification means of said electric household appliance comprise a liquid classification device as defined below.

According to the present invention, there is also provided a liquid classification device characterized by comprising a container for receiving a specimen liquid quantity, a layer of piezoelectric material covering at least a portion of the surface of said container so that said specimen liquid quantity at least partly covers the surface of the layer of piezoelectric material, a first piezoelectric transducer located on the layer of piezoelectric material and designed to convert, by inverse piezoelectric effect, a first electric signal into local deformation of the crystal lattice structure of the layer of piezoelectric material, and a second piezoelectric transducer located on the layer of piezoelectric material, at a predetermined distance from said first piezoelectric transducer, and designed to convert, by piezoelectric effect, local deformation of the crystal lattice structure of the layer of piezoelectric material into a second electric signal; the liquid classification device also comprising a signal generator which, on command, supplies said first piezoelectric transducer with a reference electric signal, and data processing means which acquire the second electric signal from said second piezoelectric transducer and process said second electric signal to classify the liquid in said container stochastically, on the basis of a predetermined number of reference mathematical models, each unequivocally associated with a respective group of liquids.

In a preferred embodiment, signal generator of said liquid classification device, on command, generates and supplies said first piezoelectric transducer with a reference electric signal which, in a predetermined frequency range, has the characteristics typical of white noise.

In a further preferred embodiment, data processing means of said liquid classification device comprise an analog-digital converter connected to said second piezoelectric transducer to convert the said second electric signal generated by the second piezoelectric transducer into digital format, and a signal processing unit which, on command, processes the digital signal from said analog-digital converter to stochastically classify said digital signal by comparing it with each of said reference mathematical models.

In a further preferred embodiment, signal processing unit of said liquid classification device comprises a memory unit storing a predetermined number of said reference mathematical models, each of which represents schematically and statistically the pattern of the digital signal from said analog-digital converter for a number of liquids in the same group of liquids; and a data processing unit which analyses the digital signal from said analog-digital converter to supply a sequence of numeric coefficients, each indicating the probability of the digital signal from said analog-digital converter matching one of the reference mathematical models stored in the memory unit.

A non-limiting embodiment of the present invention will be described by way of example with reference to the accompanying drawings, in which:
Figure 1 shows a schematic view of an electric household appliance for automatically washing articles, in accordance with the teachings of the present invention;
Figure 2 shows a schematic view of a liquid classification device in accordance with the teachings of the present invention.

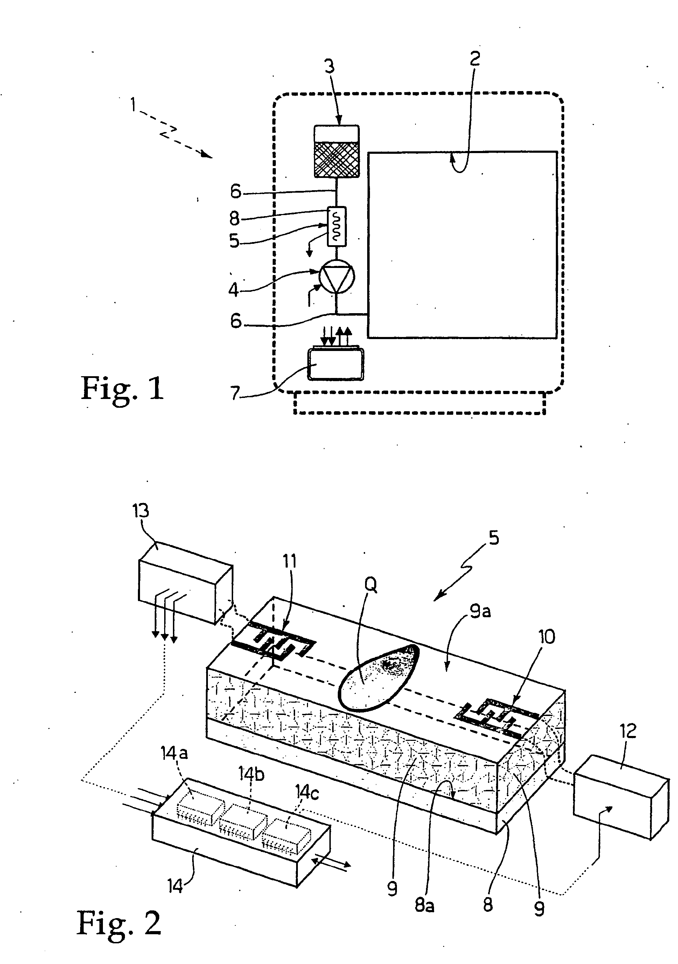

Number 1 in Figure 1 indicates as a whole an electric household appliance for automatically washing articles such as dishes or clothes, and which subjects the articles to a wash cycle employing a preferably, though not necessarily, liquid detergent.

Appliance 1 substantially comprises a wash chamber 2 into which the articles for washing are loaded; a detergent compartment 3 in which the detergent used in the wash cycle is stored; and a detergent metering and feeding device 4 which, on command, withdraws the requested amount of detergent from detergent compartment 3, and feeds the requested amount of detergent to wash chamber 2 for use in the wash cycle.

Appliance 1 also comprises a detergent classification device 5 which is able to classify the detergent used in the wash cycle, and which is located downstream from detergent compartment 3, preferably, though not necessarily, along the pipe 6 connecting detergent compartment 3 to detergent metering and feeding device 4 and to wash chamber 2; a number of known sensors (not shown) for determining operating parameters of appliance 1, such as the amount and the characteristics of the articles inserted inside wash chamber 2; and an electronic central control unit 7 for controlling detergent metering and feeding device 4 as a function of signals from detergent classification device 5, from said sensors, and from the front control panel (not shown) of appliance 1.

Detergent compartment 3, detergent metering and feeding device 4, the sensors for determining operating parameters of appliance 1, and the front control panel, are all parts commonly used in the industry and therefore not described in detail.

On command, detergent classification device 5 examines the detergent from detergent compartment 3 to determine its efficiency class stochastically and with reference to a predetermined number of efficiency classes, each unequivocally related to a respective group of detergents, all with substantially the same dirt-removing capacity, and then transmits the efficiency class to electronic central control unit 7 of appliance 1, which, as a function of the efficiency class assigned to the detergent currently being used in the wash cycle, calculates the ideal amount of detergent to be fed to wash chamber 2 by means of detergent metering and feeding device 4.

With reference to Figure 2, detergent classification device 5 comprises a container 8 for receiving, even temporarily, a specimen detergent quantity Q from detergent compartment 3; and a suitably thick layer 9 of piezoelectric material covering at least a portion of the inner surface 8a of container 8, so that the specimen detergent quantity Q in container 8 at least partly covers the surface 9a of layer 9 of piezoelectric material.

More specifically, in the example shown, container 8 is defined by a rigid tubular casing 8 of appropriate cross section, inserted along pipe 6 connecting detergent compartment 3 to detergent metering and feeding device 4; and layer 9 of piezoelectric material is applied directly to the wall of tubular casing 8 to cover part of inner surface 8a of tubular casing 8, and so as to be flowed over directly by the detergent flowing through tubular casing 8 to detergent metering and feeding device 4, which is defined by a known peristaltic pump.

With reference to Figure 2, detergent classification device 5 also comprises a first piezoelectric transducer 10 located on surface 9a of layer 9 of piezoelectric material, and designed to convert, by inverse piezoelectric effect, a first time-variable electric signal into local fluctuation of the crystal lattice structure of the piezoelectric material, which propagates along the whole surface of layer 9 of piezoelectric material in the form of a train of surface waves; a second piezoelectric transducer 11 located on surface 9a of layer 9 of piezoelectric material, at a predetermined distance from piezoelectric transducer 10, and designed to convert, by piezoelectric effect, local fluctuation of the crystal lattice structure of the piezoelectric material into a second time-variable electric signal; and a signal generator 12 which, on command, generates and supplies piezoelectric transducer 10 with an electric reference signal which, in a predetermined frequency range, has the characteristics typical of white noise.

More specifically, the electric reference signal produced by signal generator 12 is characterized by an absence of periodicity and by a constant amplitude over the whole spectrum of frequencies in said range; and the two piezoelectric transducers 10 and 11 are located on opposite sides of the detergent-covered portion of surface 9a of layer 9 of piezoelectric material, so that the train of surface waves generated by piezoelectric transducer 10 and propagating along surface 9a encounters the detergent-covered portion, and is accordingly altered, before reaching piezoelectric transducer 11.

With reference to Figure 2, in the example shown, each piezoelectric transducer 10, 11 is defined by two interdigital surface electrodes in the form of plates made of electrically conducting material and applied to surface 9a of layer 9 of piezoelectric material.

Detergent classification device 5 also comprises an analog-digital converter 13 connected to piezoelectric transducer 11 to convert the second time-variable electric signal generated by piezoelectric transducer 11 into digital format; and a signal processing unit 14 which, on command, activates signal generator 12 and processes the digital signal from analog-digital converter 13 to stochastically classify the detergent in container 8.

More specifically, signal processing unit 14 determines the efficiency class of the detergent in container 8 stochastically and with reference to a predetermined number of efficiency classes, each unequivocally related to a respective group of detergents, all with substantially the same dirt-removing capacity, and then transmits the efficiency class to electronic central control unit 7 of appliance 1, which calculates the ideal amount of detergent to be supplied to wash chamber 2, as a function of the actual dirt-removing capacity of the detergent used in the wash cycle.

In the example shown, signal processing unit 14 comprises a non-volatile memory unit 14a storing a predetermined number of (e.g. five) reference mathematical models, each schematically and statistically representing the pattern of the digital signal from analog-digital converter 13 for a number of detergents in the same efficiency class; and a data processing unit 14b which analyses the digital signal from analog-digital converter 13 to calculate a sequence of numeric coefficients, each indicating the probability of the digital signal from analog-digital converter 13 matching one of the reference mathematical models stored in memory unit 14a.

Signal processing unit 14 also comprises a logic unit 14c, which compares the various numeric coefficients and assigns the detergent in container 8 to the efficiency class of the reference mathematical model given the highest numeric coefficient by data processing unit 14b.

More specifically, in the example shown, data processing unit 14b of signal processing unit 14 acquires the sequence of values forming the digital signal from analog-digital converter 13; converts the sequence of values into a succession of integer numbers from 0 to n (where n is any integer number from 3 to 9) in which each whole number is assigned by quantifying the intensity value of the sampled signal in a scale of n levels; and calculates the probability of the succession of integer numbers extrapolated from the digital signal from analog-digital converter 13 matching each of the reference mathematical models in memory unit 14a.

In this case, each reference mathematical model describes in matrix form the probability of each integer number occupies a given position in the succession of integer numbers extrapolated by data processing unit 14b, using as a statistical reference the various integer-number sequences obtained by quantifying the digital signals produced by analog-digital converter 13 in the presence of detergents all in the same efficiency class.

Operation of appliance 1 for automatically washing articles, such as dishes or clothes, is easily deducible from the above description, with no further explanation required.

As regards operation of detergent classification device 5, on the other hand, signal processing unit 14, when requested by electronic central control unit 7 of appliance 1, activates signal generator 12, which generates and supplies piezoelectric transducer 10 with a reference electric signal with the characteristics typical of white noise. Piezoelectric transducer 10, in turn, stresses, by inverse piezoelectric effect, the crystal lattice structure of layer 9 of piezoelectric material to produce a train of surface waves which propagates along the whole surface 9a of layer 9 of piezoelectric material to piezoelectric transducer 11, encountering on the way the portion of surface 9a covered with specimen detergent quantity Q.

The surface-wave train profile is obviously altered by the presence of specimen detergent quantity Q, so that piezoelectric transducer 11 generates a second electric signal, which differs from the one generated by signal generator 12 and is somehow related to the characteristics of specimen detergent quantity Q in container 8.

At this point, signal processing unit 14 acquires from analog-digital converter 13 the sequence of values representing in digital format the second time-variable electric signal produced by piezoelectric transducer 11; processes it to compare it with each of the memorized reference mathematical models; stochastically determines the efficiency class of the detergent in container 8; and transmits the efficiency class assigned to specimen detergent quantity Q in container 8 to electronic central control unit 7.

Detergent classification device 5 obviously also operates the same way when detergent compartment 3 is loaded with powdered detergent; in which case, the detergent is dissolved in water in known manner before being extracted from the compartment.

The advantages of appliance 1 as described above are obvious : by means of detergent classification device 5, electronic central control unit 7 of appliance 1 meters the exact amount of detergent required for the wash cycle, thus avoiding waste.

Clearly, changes may be made to liquid classification device 5 and to electric household appliance 1 for automatically washing articles, as described and illustrated herein, without, however, departing from the scope of the present invention.

## Claims

1. A liquid classification device (5) for washing articles **characterized by** comprising a container (8) for receiving a specimen liquid quantity (Q), a layer (9) of piezoelectric material covering at least a portion of the surface (8a) of said container (8) so that said specimen liquid quantity (Q) at least partly covers the surface (9a) of the layer (9) of piezoelectric material, a first piezoelectric transducer (10) located on the layer (9) of piezoelectric material and designed to convert, by inverse piezoelectric effect, a first electric signal into local deformation of the crystal lattice structure of the layer (9) of piezoelectric material, and a second piezoelectric transducer (11) located on the layer (9) of piezoelectric material, at a predetermined distance from said first piezoelectric transducer (10), and designed to convert, by piezoelectric effect, local deformation of the crystal lattice structure of the layer (9) of piezoelectric material into a second electric signal; the liquid classification device (5) also comprising a signal generator (12) which, on command, supplies said first piezoelectric transducer (10) with a reference electric signal, and data processing means (13, 14) which acquire the second electric signal from said second piezoelectric transducer (11) and process said second electric signal to classify the liquid (Q) in said container (8) stochastically, on the basis of a predetermined number of reference mathematical models, each unequivocally associated with a respective group of liquids.

2. Liquid detergent classification device as claimed in Claim 1, **characterized in that** said signal generator (12), on command, generates and supplies said first piezoelectric transducer (10) with a reference electric signal which, in a predetermined frequency range, has the characteristics typical of white noise.

3. Liquid detergent classification device as claimed in Claim 1 or 2, **characterized in that** said data processing means (13, 14) comprise an analog-digital converter (13) connected to said second piezoelectric transducer (11) to convert the said second electric signal generated by the second piezoelectric transducer (11) into digital format; and a signal processing unit (14) which, on command, processes the digital signal from said analog-digital converter (13) to stochastically classify said digital signal by comparing it with each of said reference mathematical models.

4. Liquid detergent classification device as claimed in Claim 3, **characterized in that** said signal processing unit (14) comprises a memory unit (14a) storing a predetermined number of said reference mathematical models, each of which represents schematically and statistically the pattern of the digital signal from said analog-digital converter (13) for a number of liquids in the same group of liquids; and a data processing unit (14b) which analyses the digital signal from said analog-digital converter (13) to supply a sequence of numeric coefficients, each indicating the probability of the digital signal from said analog-digital converter (13) matching one of the reference mathematical models stored in the memory unit (14a).

5. Liquid classification device as claimed in Claim 4, **characterized in that** said signal processing unit (14) also comprises a logic unit (14c) which compares the various numeric coefficients, and assigns the liquid (Q) in said container (8) to the group of liquids associated with the reference mathematical model given the highest numeric coefficient by said data processing unit (14b).

6. An electric household appliance (1) for automatically washing articles, comprising a wash chamber (2) in which the articles for washing are loaded, a detergent compartment (3) in which the wash detergent is stored, and a detergent metering and feeding device (4) which, on command, withdraws a given quantity of detergent from said detergent compartment (3) and supplies the given quantity of detergent to the wash chamber (2); said electric household appliance (1) being **characterized by** also comprising detergent classification means (5) comprising the liquid classification device as claimed in claim 1 for classifying the detergent used in the wash cycle, and an electronic central control unit (7) which controls said detergent metering and feeding device (4) as a function of signals from said detergent classification means (5) and of other operating parameters of the electric household appliance (1); said detergent classification means (5), being able to examine the detergent from said detergent compartment (3) to determine its efficiency class with reference to a predetermined number of efficiency classes, each of which is unequivocally associated with a respective group of detergents with substantially the same dirt-removing capacity, and to transmit said efficiency class to the electronic central control unit (7); and said electronic central control unit (7) being able to calculate the ideal quantity of detergent to be supplied to the wash chamber (2) by said detergent metering and feeding device (4) on the basis of the efficiency class assigned to the detergent.

7. Electric household appliance for automatically washing articles as claimed in Claim 6, **characterized in that** said liquid detergent classification means (5) are able to determine the efficiency class of the detergent from said detergent compartment (3) stochastically.

8. Electric household appliance for automatically washing articles as claimed in Claim 7, **characterized in that** said liquid detergent classification means (5) comprise Liquid classification device (5) as claimed in any one of Claims 1 to 5.

9. Electric household appliance for automatically washing articles as claimed in Claim 8, **characterized in that** said liquid detergent compartment (3) is connected to the detergent metering and feeding device (4) and to the wash chamber (2) by a pipe (6); and said liquid classification device (5) is located along said pipe (6).

10. Electric household appliance for automatically washing articles as claimed in Claim 9, **characterized in that** the container (8) of said liquid detergent classification device (5) is defined by a tubular casing (8) of appropriate cross section, inserted along said pipe (6).

## Patentansprüche

1. Flüssigkeits-Klassifizierungsvorrichtung (5) zum Waschen von Gegenständen, **dadurch gekennzeichnet, dass** sie Folgendes umfasst: einen Behälter (8) zur Aufnahme einer Probenflüssigkeitsmenge (Q), eine Schicht (9) aus piezoelektrischem Material, das mindestens einen Teil der Oberfläche (8a) des Behälters (8) bedeckt, so dass die Probenflüssigkeitsmenge (Q) die Oberfläche (9a) der Schicht (9) aus piezoelektrischem Material mindestens teilweise bedeckt, einen ersten piezoelektrischen Wandler (10), der auf der Schicht (9) aus piezoelektrischem Material angeordnet ist und geeignet ist, durch inversen Piezoeeffekt ein erstes elektrisches Signal in eine lokale Verformung der Kristallgitterstruktur der Schicht (9) aus piezoelektrischem Material umzuwandeln, und einen zweiten piezoelektrischen Wandler (11), der auf der Schicht (9) aus piezoelektrischem Material in einem vorbestimmten Abstand zu dem ersten piezoelektrischen Wandler (10) angeordnet ist und geeignet ist, durch piezoelektrischen Effekt eine lokale Verformung der Kristallgitterstruktur der Schicht (9) aus piezoelektrischem Material in ein zweites elektrisches Signal umzuwandeln; wobei die Flüssigkeits-Klassifizierungsvorrichtung (5) außerdem umfasst: einen Signalgenerator (12), der auf Befehl an den ersten piezoelektrischen Wandler (10) ein elektrisches Bezugssignal liefert, und Datenverarbeitungsmittel (13, 14), die das zweite elektrische Signal von den zweiten piezoelektrischen Wandler (11) erhalten und das zweite elektrische Signal verarbeiten, um die Flüssigkeit (Q) in dem Behälter (8) auf der Basis einer vorbestimmten Anzahl mathematischer Bezugsmodelle, von denen jedes eindeutig einer jeweiligen Gruppe von Flüssigkeiten zugeordnet ist, stochastisch zu klassifizieren.

2. Flüssigkeits-Klassifizierungsvorrichtung nach Anspruch 1, **dadurch gekennzeichnet, dass** der Signalgenerator (12) auf Befehl ein elektrisches Bezugssignal erzeugt und an den ersten piezoelektrischen Wandler (10) liefert, das in einem vorbestimmten Frequenzbereich die Eigenschaften aufweist, die typisch für weißes Rauschen sind.

3. Flüssigkeits-Klassifizierungsvorrichtung nach Anspruch 1 oder 2, **dadurch gekennzeichnet, dass** die Datenverarbeitungsmittel (13, 14) umfassen: einen Analog-Digital-Wandler (13), der mit dem zweiten piezoelektrischen Wandler (11) verbunden ist, um das zweite elektrische Signal, das von dem zweiten piezoelektrischen Wandler (11) erzeugt wurde, in ein digitales Format umzuwandeln; und eine Signalverarbeitungseinheit (14), die auf Befehl das digitale Signal von dem Analog-Digital-Wandler (13) verarbeitet, um das digitale Signal stochastisch zu klassifizieren, indem sie es mit jedem der mathematischen Bezugsmodelle vergleicht.

4. Flüssigkeits-Klassifizierungsvorrichtung nach Anspruch 3, **dadurch gekennzeichnet, dass** die Signalverarbeitungseinheit (14) umfasst: eine Speichereinheit (14a), die eine vorbestimmte Anzahl der mathematischen Bezugsmodelle speichert, wobei jedes das Muster des digitalen Signals aus dem Analog-Digital-Wandler (13) für eine Anzahl von Flüssigkeiten in der gleichen Flüssigkeitsgruppe schematisch und statistisch darstellt; und eine Datenverarbeitungseinheit (14b), die das digitale Signal aus dem Analog-Digital-Wandler (13) analysiert, um eine Sequenz numerischer Koeffizienten zu liefern, die jeweils die Wahrscheinlichkeit anzeigen, mit der das digitale Signal aus dem Analog-Digital-Wandler (13) mit einem der mathematischen Bezugsmodelle übereinstimmt, die in der Speichereinheit (14a) gespeichert sind.

5. Flüssigkeits-Klassifizierungsvorrichtung nach Anspruch 4, **dadurch gekennzeichnet, dass** die Signalverarbeitungseinheit (14) auch eine Logikeinheit (14c) umfasst, die die verschiedenen numerischen Koeffizienten vergleicht und die Flüssigkeit (Q) in dem Behälter (8) zu der Flüssigkeitsgruppe zuordnet, die dem mathematischen Bezugsmodell zugehört, das von der Datenverarbeitungseinheit (14b) mit dem höchsten numerischen Koeffizienten versehen wurde.

6. Elektrisches Haushaltsgerät (1) zum automatischen Waschen von Gegenständen, umfassend eine Waschkammer (2), in die die zu waschenden Gegenstände gefüllt werden, ein Waschmittelfach (3), in dem das Waschmittel gespeichert wird, und eine Waschmitteldosier- und Zuführvorrichtung (4), die auf Befehl eine bestimmte Menge an Waschmittel aus dem Waschmittelfach (3) entnimmt und die bestimmte Menge an Waschmittel der Waschkammer (2) zuführt; wobei das elektrische Haushaltsgerät (1) **dadurch gekennzeichnet ist, dass** es außerdem umfasst: Waschmittel-Klassifizierungsmittel (5), die die Flüssigkeits-Klassifizierungsvorrichtung nach Anspruch 1 umfassen, um das in dem Waschzyklus verwendete Waschmittel zu klassifizieren, und eine elektronische Zentralsteuereinheit (7), die die Waschmitteldosier- und Zuführvorrichtung (4) in Abhängigkeit von Signalen aus den Waschmittel-Klassifizierungsmitteln (5) und von anderen Betriebsparametern des elektrischen Haushaltsgeräts (1) steuert; wobei die Waschmittel-Klassifizierungsmittel (5) geeignet sind, das Waschmittel aus dem Waschmittelfach (3) zu prüfen, um seine Wirksamkeitsklasse in Bezug auf eine Anzahl von Wirksamkeitsklassen zu bestimmen, von denen jede eindeutig einer bestimmten' Gruppe von Waschmitteln mit im Wesentlichen der gleichen Schmutzbeseitigungsfähigkeit zugehört, und um die Wirksamkeitsklasse an die elektronische Zentralsteuereinheit (7) zu übermitteln; und wobei die elektronische Zentralsteuereinheit (7) geeignet ist, auf Basis der dem Waschmittel zugeordneten Wirksamkeitsklasse die ideale Waschmittelmenge zu berechnen, die der Waschkammer (2) durch die Waschmitteldosier- und Zuführvorrichtung (4) zugeführt werden soll.

7. Elektrisches Haushaltsgerät zum automatischen Waschen von Gegenständen nach Anspruch 6, **dadurch gekennzeichnet, dass** die Waschmittel-Klassifizierungsmittel (5) geeignet sind, die Wirksamkeitsklasse des Waschmittels aus dem Waschmittelfach (3) stochastisch zu bestimmen.

8. Elektrisches Haushaltsgerät zum automatischen Waschen von Gegenständen nach Anspruch 7, **dadurch gekennzeichnet, dass** die Waschmittel-Klassifizierungsmittel (5) die Flüssigkeits-Klassifizierungsvorrichtung (5) nach einem der Ansprüche 1 bis 5 umfassen.

9. Elektrisches Haushaltsgerät zum automatischen Waschen von Gegenständen nach Anspruch 8, **dadurch gekennzeichnet, dass** das Waschmittelfach (3) durch eine Rohrleitung (6) mit der Waschmitteldosier- und Zuführvorrichtung (4) und mit der Waschkammer (2) verbunden ist und dass die Flüssigkeits-Klassifizierungsvorrichtung (5) entlang der Rohrleitung (6) angeordnet ist.

10. Elektrisches Haushaltsgerät zum automatischen Waschen von Gegenständen nach Anspruch 9, **dadurch gekennzeichnet, dass** der Behälter (8) der Flüssigkeits-Klassifizierungsvorrichtung (5) durch ein rohrförmiges Gehäuse (8) mit geeignetem Querschnitt definiert wird, das entlang der Rohrleitung (6) eingefügt ist.

## Revendications

1. Dispositif de classification de liquides (5) pour laver des articles, **caractérisé en ce qu'**il comprend un contenant (8) pour recevoir une quantité de liquide de spécimen (Q), une couche (9) de matériau piézoélectrique couvrant au moins une portion de la surface (8a) dudit contenant (8) de sorte que ladite quantité de liquide de spécimen (Q) couvre au moins partiellement la surface (9a) de la couche (9) du matériau piézoélectrique, un premier transducteur piézoélectrique (10) situé sur la couche (9) du matériau piézoélectrique et conçu pour convertir, par effet piézoélectrique inverse, un premier signal électrique en déformation locale de la structure de réseau cristallin de la couche (9) du matériau piézoélectrique, et un deuxième transducteur piézoélectrique (11) situé sur la couche (9) du matériau piézoélectrique, à une distance prédéterminée dudit premier transducteur piézoélectrique (10), et conçu pour convertir, par effet piézoélectrique, la déformation locale de la structure de réseau cristallin de la couche (9) du matériau piézoélectrique en un deuxième signal électrique; le dispositif de classification de liquides (5) comprenant également un générateur de signaux (12) qui, sur commande, fournit audit premier transducteur piézoélectrique (10) un signal électrique de référence, et des moyens de traitement de données (13, 14) qui acquierent le deuxième signal électrique dudit deuxième transducteur piézoélectrique (11) et traitent ledit deuxième signal électrique pour classifier le liquide (Q) dans ledit contenant (8) de manière stochastique, sur la base d'un nombre prédéterminé de modèles mathématiques de référence, chacun associé de manière non équivoque à un groupe de liquides respectif.

2. Dispositif de classification de liquides selon la revendication 1, **caractérisé en ce que** ledit générateur de signaux (12), sur commande, génère et fournit audit premier transducteur piézoélectrique (10) un signal électrique de référence qui, dans une plage de fréquence prédéterminée, possède la caractéristique typique du bruit blanc.

3. Dispositif de classification de liquides selon la revendication 1 ou 2, **caractérisé en ce que** lesdits moyens de traitement de données (13, 14) comprennent un convertisseur analogique-numérique (13) relié audit deuxième transducteur piézoélectrique (11) pour convertir ledit deuxième signal électrique produit par le deuxième transducteur piézoélectrique (11) en format numérique; et une unité de traitement de signaux (14) qui, sur commande, traite le signal numérique dudit convertisseur analogique-numérique (13) pour classifier de manière stochastique ledit signal numérique en le comparant avec chacun desdits modèles mathématiques de référence.

4. Dispositif de classification de liquides selon la revendication 3, **caractérisé en ce que** ladite unité de traitement de signaux (14) comprend une unité de mémoire (14a) stockant un nombre prédéterminé desdits modèles mathématiques de référence, dont chacun représente schématiquement et statistiquement le motif du signal numérique dudit convertisseur analogique-numérique (13) pour un nombre de liquides dans le même groupe de liquides; et une unité de traitement de données (14b) qui analyse le signal numérique dudit convertisseur analogique-numérique (13) pour fournir une séquence de coefficients numériques, chacun indiquant la probabilité du signal numérique dudit convertisseur analogique-numérique (13) correspondant à un des modèles mathématique de référence stockés dans l'unité de mémoire (14a).

5. Dispositif de classification de liquides selon la revendication 4, **caractérisé en ce que** ladite unité de traitement de signaux (14) comprend également une unité logique (14c) qui compare les divers coefficients numériques et attribue le liquide (Q) dans ledit contenant (8) au groupe de liquides associé au modèle mathématique de référence fourni le coefficient numérique le plus élevé par ladite unité de traitement de données (14b).

6. Appareil électroménager (1) pour automatiquement laver des articles, comprenant une chambre de lavage (2) dans laquelle les articles à laver sont chargés, un compartiment de détergent (3) dans lequel le détergent de lavage est stocké et un dispositif de dosage et d'amenée de détergent (4) qui, sur commande, retire une quantité donnée de détergent dudit compartiment de détergent (3) et fournit la quantité donnée de détergent à la chambre de lavage (2); ledit appareil électroménager (1) étant **caractérisé en** comprenant également un moyen de classification de détergent (5) comprenant le depositif de classification de liquides tel que revendiqué dans la revendication 1 pour classifier le détergent utilisé dans le cycle de lavage, et une unité de commande électronique centrale (7) qui commande ledit dispositif de dosage et d'amenée de détergent (4) en fonction de signaux dudit moyen de classification de détergent (5) et d'autres paramètres de fonctionnement de l'appareil électroménager (1); ledit moyen de classification de détergent (5) étant apte à examiner le détergent dudit compartiment de détergent (3) pour déterminer sa classe d'efficacité par rapport à un nombre prédéterminé de classes d'efficacité, dont chacune est associée d'une manière non équivoque à un groupe respectif de détergents ayant sensiblement la même capacité d'enlèvement de salissures, et pour transmettre ladite classe d'efficacité à l'unité de commande électronique centrale (7); et ladite unité de commande électronique centrale (7) étant apte à calculer la quantité idéale de détergent à fournir à la chambre de lavage (2) par ledit dispositif de dosage et d'amenée de détergent (4) sur la base de la classe d'efficacité attribuée au détergent.

7. Appareil électroménager pour automatiquement laver des articles tel que revendiqué dans la revendication 6, **caractérisé en ce que** lesdits moyens de classification de détergents (5) sont aptes à déterminer la classe d'efficacité du détergent dudit compartiment de détergent (3) de manière stochastique.

8. Appareil électroménager pour automatiquement laver des articles tel que revendiqué dans la revendication 7,
**caractérisé en ce que** lesdits moyens de classification de détergents (5) comprennent un dispositif de classification de liquides (5) tel que revendiqué dans l'une quelconque des revendications 1 à 5.

9. Appareil électroménager pour automatiquement laver des articles tel que revendiqué dans la revendication 8, **caractérisé en ce que** ledit compartiment de détergent (3) est relié au dispositif de dosage et d'amenée de détergent (4) et à la chambre de lavage (2) par un tuyau (6); et ledit dispositif de classification de liquide (5) est situé le long dudit tuyau (6).

10. Appareil électroménager pour automatiquement laver des articles tel que revendiqué dans la revendication 9, **caractérisé en ce que** le contenant (8) dudit dispositif de classification de liquides (5) est défini par un boîtier tubulaire (8) d'une section transversale appropriée, inséré le long dudit tuyau (6).
